# EUROPEAN PATENT APPLICATION

(11) **EP 4 394 178 A1**
(43) Date of publication of application: **03.07.2024**
(21) Application number: 22383319.5
(22) Date of filing: 30.12.2022
(51) Int. Cl.: F03D 7/02

(54) **METHOD FOR OPERATING A WIND TURBINE, CONTROL SYSTEM FOR OPERATING A WIND TURBINE AND WIND TURBINE**

(71) Applicant: Nordex Energy SE & Co. KG, 22419 Hamburg (DE); Nordex Energy Spain, S.A.U., 31395 Barasoain (Navarra) (ES)
(72) Inventor: GARCIA BARACE, Alberto, Pamplona-Irunea (ES); MIRANDA SUESCUN, Edurne, Mutilva (ES); VAN SOLINGEN, Edwin, Forstweg (DE); POKRIEFKE, Gritt, Hamburg (DE); LABORENZ, Jacob, Hamburg (DE); JOIS, Varun, Hamburg, (DE)
(74) Representative: Epping - Hermann - Fischer

(57) **Abstract**

According to an embodiment, the method is for operating a wind turbine (100) having a rotor (10) with N rotor blades (1, 2, 3), wherein N ≥ 2. The wind turbine further comprises a pitch setting system (13) for individually setting the pitch angles (β_i) of the rotor blades. The method comprises a step in which first information (I1) is determined, wherein the first information is representative for whether an edge-wise movement of at least one rotor blade exceeds a threshold while the rotor is rotating with a frequency P. If this is the case, an output signal (OS) is generated which is configured to cause the pitch setting system to individually and periodically change the pitch angles of the N rotor blades each with a frequency of (M*N-1)*P in order to reduce edge-wise movements of the rotor blades, wherein M is an integer greater than zero.

## Description

The present disclosure relates to a method for operating a wind turbine. Furthermore, the present disclosure relates to a computer program, a computer-readable data carrier and a control device for performing the method for operating a wind turbine. Moreover, the present disclosure relates to a control system for operating a wind turbine and a wind turbine.

Wind turbines are widely known and are used to convert wind energy into electrical energy. The lengths of the rotor blades used in such wind turbines have increased in recent years. Vibrations of the rotor blades induce load on the rotor shaft and bear the risk of structural damage of the rotor blades.

One object to be achieved is to provide a method for operating a wind turbine with which vibrations of the rotor blades of the wind turbine can be reduced, particularly without unnecessarily reducing the power output of the wind turbine. Further objects to be achieved are to provide a computer program, a computer-readable data carrier and a control device for performing such a method. Additional objects to be achieved are to provide a control system for operating a wind turbine with such a method and a wind turbine which is operable with such a method.

First, the method for operating a wind turbine is specified.

According to an embodiment, the method is for operating a wind turbine having a rotor with N rotor blades, wherein N ≥ 2. The wind turbine further comprises a pitch setting system for individually setting the pitch angles of the N rotor blades. The method comprises a step in which first information is determined, wherein the first information is representative for whether an edge-wise movement of at least one rotor blade exceeds a threshold while the rotor is rotating with a frequency P. If this is the case, i.e. if the first information is representative for the edge-wise movement of at least one rotor blade, i.e. one or more rotor blades, to exceed the threshold, an output signal is generated which is configured to cause the pitch setting system to individually and periodically change the pitch angles of the N rotor blades each with a frequency of (M*N-1)*P in order to reduce edge-wise movements of the rotor blades. M is an integer greater than zero.

The present invention is, inter alia, based on the recognition that an edge-wise movement of a rotor blade can cause high loads on the rotor shaft and can also lead to structural damage to the rotor blade. In the case of very large edge-wise movements of the rotor blade, a wind turbine is normally stopped (turbine stop) but this reduces the annular energy production (AEP). In order to reduce the AEP loss, the inventors developed the so-called individual-pitch-control-(M*N-1)*P, IPC-(M*N-1)*P for short, which, when activated, causes an individual and periodic change of the pitch angles of the rotor blades each with the frequency (M*N-1)*P. This efficiently counteracts the excitation of edge-wise vibrations of the rotor blades so that a shutdown can be avoided.

The method specified herein is, in particular, a computer implemented method, i.e. is performed by a computer or a processor.

Herein, when information is representative for a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The first information is representative for whether an edge-wise movement, for example an edge-wise vibration, of at least one rotor blade exceeds a threshold while the rotor is rotating with frequency P. The threshold may be a predetermined threshold. By way of example, the first information is either 0 or 1, with 0 meaning that the threshold is not exceeded and 1 meaning that the threshold is exceeded.

The first information may be determined repeatedly, e.g. periodically. For example, the first information is determined at least once or at least 5-times or at least 10-times per full rotation of the rotor.

The first information is, in particular, representative for the current situation in the wind turbine. For example, the first information is determined from measurements. The measurements used for determining the first information were taken, for example, at most 5 s or at most 1 s before determining the first information.

The first information may additionally be representative for the number of rotor blades where the respective edge-wise movement exceeds the threshold. The thresholds for the different rotor blades may be the same. For example, only if the first information is representative for the edge-wise movements of two or more rotor blades to exceed the respective threshold, is the output signal generated. That is, the condition that the first information must be representative for the edge-wise movement of at least one rotor blade to exceed the threshold is a necessary condition for the output signal to be generated. It may or may not be a sufficient condition.

The edge-wise movement of a rotor blade is a movement in a reference frame which rotates together with the rotor blade, herein called "rotating reference frame". Thus, the speed of rotation of the rotating reference frame is the same as the speed of rotation of the rotor blade(s).

The output signal is generated if, particularly only if, the first information is representative for the edge-wise movement of at least one rotor blade to exceed the threshold. The output signal is, in particular, an electric signal which can be transmitted via a wire or wirelessly. The output signal is configured to cause the pitch setting system to individually and periodically change the pitch angles of the N rotor blades each with a frequency of (M*N-1)*P. That is, the output signal comprises information which can be evaluated by the pitch setting system and can be translated by the pitch setting system into a mechanical movement of the rotor blades about their longitudinal axes. The pitch angles of all rotor blades are changed with the same frequency and optionally also with the same amplitude. There may be a phase shift in the periodic change of the pitch angles between two rotor blades. For example, the phase shift between two adjacent rotor blades is 2n/N.

For example, the amplitude of the periodic change of the pitch angle of each rotor blade is at least 1° or at least 2° or at least 3°. The pitch angle of a rotor blade is defined, for example, as the angle between the chord line of the rotor blade and the plane of rotation of the rotor (rotor plane). In the case of a pitch angle of 0°, an edge-wise moment of the rotor blade is a movement parallel to the rotor plane.

The generation of the output signal and, optionally, also the start of the periodic change of the pitch angles may be done in real time. For example, it is done/started within a time interval of at most one rotation or at most two rotations of the rotor after the first information has been determined to be representative for the edge-wise movement of at least one rotor blade to exceed the threshold.

After the output signal has been generated and/or the periodic change of the pitch angles has been started, the periodic change is maintained for a certain time interval, e.g. for at least one rotation or at least two rotations or at least five rotations of the rotor. During this time interval, it may be continued to determine the first information. In the case that the then-determined first information is representative for the edge-wise movements of less rotor blades or no rotor blades to exceed the threshold, the individual and periodic change of the pitch angles may be stopped. For example, in this case, a further output signal is then generated which is configured to cause the pitch setting system to go back to normal operation. In normal operation, the pitch angles of all rotor blades are the same and/or are changed collectively, for example.

In today's wind turbines, the Eigen-frequencies of the edge-wise vibrations of the rotor blades are sometimes close or even identical to the frequency (M*N+1)*P when the rotor is rotating at its nominal speed or its nominal frequency, respectively. As a consequence, in the case that the rotor is rotating with the nominal frequency, there is a high risk of the local turbulences or a local gust or a sheer in the wind speed resonantly exciting edge-wise vibrations of the rotor blades.

According to a further embodiment, the method comprises a step in which second information is provided. The second information is representative for a M*N*P-content in a bending moment acting on the rotor while the rotor is rotating with frequency P. The M*N*P-content is the content in the bending moment of the rotor having the frequency M*N*P.

Bending moments acting on a rotor are quantities investigated in a fixed reference frame. The fixed reference frame is a reference frame of the wind turbine, i.e. a reference frame which is not rotating with the rotor. The fixed reference frame is, for example, fixed with respect to the ground on which the wind turbine is mounted. The fixed reference frame is assigned to parts of the wind turbine which are not rotating, e.g. the tower or nacelle.

The second information may be representative for the tilt bending moment and/or the yaw bending moment acting on the rotor. The tilt bending moment is the bending moment acting on the rotor in order to deflect the rotor plane around an axis running parallel to the ground and parallel to the rotor plane. The yaw bending moment is the moment acting on the rotor in order to deflect the rotor plane around an axis running perpendicularly to the ground and parallel to the rotor plane.

According to a further embodiment, the first information is determined depending on the second information.

The M*N*P-content in the bending moment acting on the rotor is highly related to the (M*N+1)*P-content in the edge-wise movement of the rotor blade, which results from the rules of transformation between a fixed reference frame and a rotating reference frame. However, it may be easier to determine the bending moments acting on the rotor or it may be easier to control the pitch angles of the rotor blades depending on information about the bending moments acting on the rotor. Therefore, it may be easier to perform the IPC-(M*N-1)*P based on information about the bending moments acting on the rotor instead of directly using information about the edge-wise movements of the rotor blades.

According to a further embodiment, N = 3, i.e. the rotor comprises exactly three rotor blades.

According to a further embodiment, M = 1. M = 1 relates to the first Eigen-frequency when the rotor is rotating with nominal frequency. The first Eigen-frequency is excited more easily than higher order frequencies and, therefore, an excitation of the first Eigen-mode of the edge-wise vibration bears a particularly high risk of damage.

According to a further embodiment, the method comprises a further step in which third information is provided. The third information is representative for bending moments acting on the rotor blades. The bending moments acting on the rotor blades are quantities in the rotating reference frame.

The third information may be representative for the edge-wise bending moment and/or the flap-wise bending moment acting on each rotor blade. Edge-wise and flap-wise bending moments are bending moments which are measurable with the help of sensors, e.g. strain sensors. The third information may be representative for the bending moments as a function of time. For example, measurements of the bending moment(s) are taken several times per rotation of the rotor.

According to a further embodiment, the first information is determined depending on the third information.

According to a further embodiment, the method comprises a further step, in which fourth information is provided which is representative for a bending moment acting on the rotor as a function of time. The bending moment acting on the rotor may be the tilt bending moment and/or the yaw bending moment.

According to a further embodiment, the second information is determined depending on the fourth information with the help of a filter, e.g. a band-pass filter and/or a notch filter. That is, the M*N*P-content in the bending moment acting on the rotor may be determined from the time-dependent bending moments acting on the rotor by applying a filter.

According to a further embodiment, the fourth information is determined depending on the third information with the help of a coordinate transformation. Thus, the bending moment(s) acting on the rotor are determined from the bending moments acting on the rotor blades using a coordinate transformation. The coordinate transformation is, for example, a Coleman transformation.

According to a further embodiment, determining the first information comprises or consists of determining whether the amplitude of the M*N*P-content in the bending moment acting on the rotor exceeds a threshold. For example, only when the amplitude of the M*N*P-content exceeds the threshold, is the first information determined to be representative for the edge-wise movement of at least one rotor blade to exceed the threshold.

According to a further embodiment, the third information is representative for the respective edge-wise bending moment acting on the rotor blades. That is, for each rotor blade, the third information is representative for the edge-wise bending moment of that rotor blade.

According to a further embodiment, the first information is determined depending on the third information and comprises or consists of determining whether the amplitude of an edge-wise bending moment acting on at least one rotor blade exceeds a threshold. That is, it is determined whether the amplitude, e.g. the maximum value, of the edge-wise bending moment of one rotor blade, or whether the amplitudes of the edge-wise bending moments of two or more rotor blades, exceed the threshold(s). If this is the case, the first information is determined to be representative for the edge-wise movement of one or more rotor blades to exceed the threshold.

According to a further embodiment, determining the first information comprises or consists of determining whether a (M*N+1)*P-content in the edge-wise bending moment acting on a rotor blade exceeds a threshold. The (M*N+1)*P-content is the content in the edge-wise bending movement having the frequency (M*N+1)*P. For example, determining the first information comprises or consists of determining whether the amplitude of the (M*N+1)*P-content exceeds a threshold.

In order to filter out the (M*N+1)*P-content in the edge-wise bending moment, a filter, like a band-pass filter and/or a notch filter, may be used. The filter widths of the band-pass filter may be, for example, between 20% and 50% of (M*N+1)*P.

According to a further embodiment, determining the first information comprises determining whether the frequency P lies within a critical frequency range and/or whether the power output of the wind turbine lies within a critical power range. The critical frequency range is, for example, a frequency range including the frequency P with which the rotor rotates in nominal operation (nominal frequency). As explained above, when rotating with the nominal frequency, there is a particularly high coupling to the (first) Eigen-frequency of the edge-wise vibrations of the rotor blades. The critical power output range is equivalent to the critical frequency range.

The first information may be determined depending on several pieces of information, for example depending on whether an amplitude of the M*N*P-content in the bending moment acting on the rotor exceeds a threshold and/or depending on whether an amplitude of an edge-wise bending moment acting on a rotor blade exceeds a threshold and/or depending on whether the frequency P lies with the critical frequency range and/or whether the power output of the wind turbine lies within a critical power range. For example, only when at least two of these conditions are fulfilled, is the first information determined to be representative for the edge-wise movement of at least one rotor blade to exceed the threshold. For example, only when the M*N*P-content in a bending moment acting on the rotor and at least one of the other conditions are fulfilled, is the first information determined to be representative for the edge-wise movement of at least one rotor blade to exceed the threshold.

According to a further embodiment, the third information is determined depending on measurements taken with the help of a sensor system. The sensor system is, for example, part of the wind turbine. The sensor system may comprise one or more strain sensors, e.g. optical fiber sensors or strain gauge sensors. Moreover, the sensor system may comprise a position sensor for measuring the position(s) of the rotor blades. Particularly, the sensor system is configured to measure the edge-wise and/or flap wise bending moments of the rotor blades. The positions of the rotor blades are, e.g., their azimuthal angles in rotor plane. The position sensor may be or may comprise an optical encoder.

Next, the computer program, the computer-readable data carrier and the control device are specified.

According to an embodiment, the computer program comprises instructions which, when the program is executed by a computer, cause the computer to carry out the method for operating a wind turbine according to any one of the embodiments described herein.

According to an embodiment, the computer-readable data carrier has the computer program stored thereon.

According to an embodiment, the control device comprises at least one processor and/or at least one programmable logic controller, plc for short, configured to perform the method for operating a wind turbine according to any one of the embodiments described herein. The control device may be a computer, for example. The control device may be part of the wind turbine or may be an external device, which is, for example, several km away from the wind turbine, like a computer in a control station (remote control). For example, the control device is configured to communicate with the wind turbine or components thereof via a wire or wirelessly.

Next, the control system for operating a wind turbine is specified. The control system is, in particular, configured to perform the method according to any one of the embodiments described herein. Therefore, all features disclosed for the method are also disclosed for the control system and vice versa.

According to an embodiment, the control system is a control system for operating a wind turbine which has a rotor with N rotor blades, wherein N ≥ 2, and a pitch setting system for individually setting the pitch angles of the N rotor blades. The control system comprises a sensor system configured to take measurements with the help of which it is determinable whether an edge-wise movement of at least one rotor blade exceeds a threshold while the rotor is rotating with frequency P. The control system further comprises the control device as specified herein. The control device is signally connectable or connected to the sensor system in order to provide the control device with the measurements of the sensor system. The control device is signally connectable or connected to the pitch setting system in order to provide the pitch setting system with the output signal of the control device so that the pitch setting system sets the pitch angles of the rotor blades depending on the output signal.

For example, the sensor system is signally connectable or is signally connected with the control device via a wire or wirelessly. The sensor system and/or the control device may be part of the wind turbine, i.e. may be integrated into the wind turbine, or may be external. The control device may be signally connected or connectable to the pitch setting system via wire or wirelessly.

The control device may, accordingly, comprise an interface for receiving data from the sensor system and an interface for sending the output signal to the pitch setting system.

The pitch setting system may be part of the control system. The pitch setting system comprises, for example, at least one actuator for each of the rotor blades, wherein the actuator is configured to change and/or set the pitch angle of the respective rotor blade. The pitch setting system is configured to individually and periodically change the pitch angles of the rotor blades. For example, it is configured to change the pitch angles of the rotor blades independently of each other.

According to a further embodiment, the sensor system comprises at least one strain sensor for each rotor blade. For example, each rotor blade is assigned at least one strain sensor coupled thereto. For example, each rotor blade is assigned at least three or at least four strain sensors. Strain sensors allow the bending moment(s) acting on the rotor blade to be determined. All features disclosed for the at least one strain sensor are herein also disclosed for all other strain sensors.

The strain sensors may be integrated into the respective rotor blade or may be applied to an outer surface of the respective rotor blade. The strain sensors may be temperature compensating strain sensors.

According to a further embodiment, the strain sensors are fiber optic strain sensors.

According to a further embodiment, the strain sensors are strain gauge sensors.

Next, the wind turbine is specified.

According to an embodiment, the wind turbine comprises a rotor with N rotor blades, wherein N ≥ 2, and a pitch setting system for individually setting the pitch angles of the N rotor blades. Furthermore, the wind turbine comprises the control system according to any one of the embodiments described herein.

Hereinafter, the method for operating a wind turbine, the control device, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figures 2 and 3 show the behavior of an exemplary embodiment of the wind turbine during operation at different conditions,
Figure 4 shows an example of the time-dependent tilt bending moment acting on the rotor of a wind turbine,
Figure 5 shows a graph illustrating different frequencies being of relevance in a wind turbine,
Figures 6 and 7 show examples of the time-dependent edge-wise bending-moment acting on a rotor blade of a wind turbine,
Figures 8 to 10 show flowcharts of different exemplary embodiments of the method for operating a wind turbine,
Figure 11 shows an exemplary embodiment of the control system and the control device,
Figure 12 shows a further exemplary embodiment of the method for operating a wind turbine.

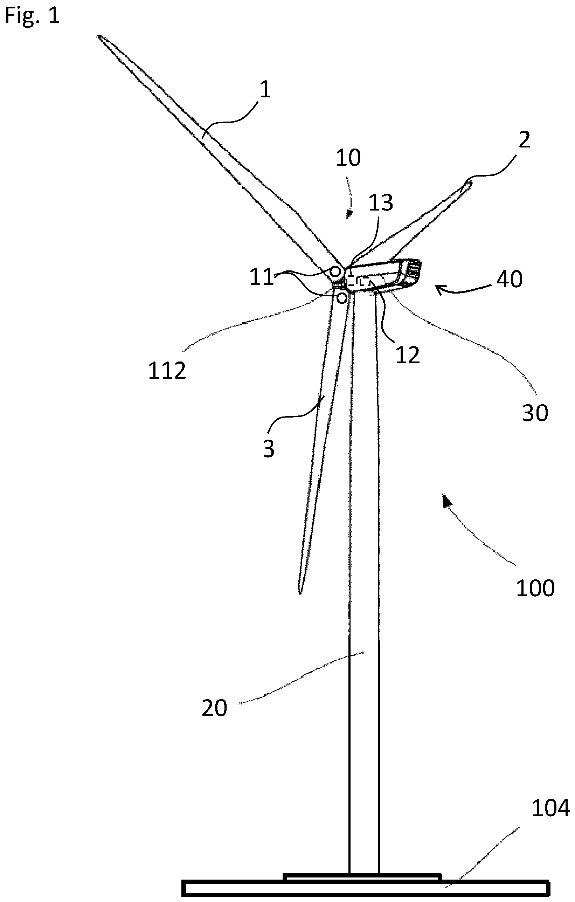

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 106 is rotatably mounted. The nacelle 106, for example, comprises a generator which is coupled to a rotor 10 via a gearbox (not shown). The rotor 10 comprises N = 3 (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

In order to control the rotational speed and the power output, the wind turbine 100 comprises a pitch setting system 13 which is configured to set the pitch angles of the rotor blades 1, 2, 3. The pitch setting system 13 is configured to set the pitch angle of each rotor blade 1, 2, 3 individually and periodically. For example, the pitch setting system 13 comprises at least one actuator for each rotor blade 1, 2, 3 via which an electrical signal is translated into a mechanical movement of the respective rotor blade 1, 2, 3 about its longitudinal axis.

The wind turbine 100 further comprises a control system 40 configured to operate the wind turbine 100. The control system 40 comprises a first sensor system 11, a second sensor system 12 and a control device 30.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. Furthermore, the first sensor system 11 may comprise at least one position sensor with the help of which the positions of the rotor blades 1, 2, 3, i.e. their azimuthal angles, can be determined.

The second sensor system 12 comprises, for example, at least one sensor for measuring the pitch angles of the rotor blades 1, 2, 3, at least one sensor for measuring the rotational speed of the rotor 10 and at least one sensor for measuring the power output of the wind turbine. The measurement signals of these sensors can be used to estimate/determine the thrust force acting on the rotor 10 and the wind turbulence intensity at the rotor 10.

The control device 30 comprises, for example, at least one processor. It may be located in the nacelle 106. The control device 30 is signally coupled to the sensor systems 11, 12 and the pitch setting system 13 so that it can communicate with the systems 11, 12, 13. The measurements from the sensor systems 11, 12 are processed by the control device 30 and, depending on this, an output signal is possibly transmitted to the pitch setting system 13 in order to adjust the pitch angles of the rotor blades 1, 2, 3.

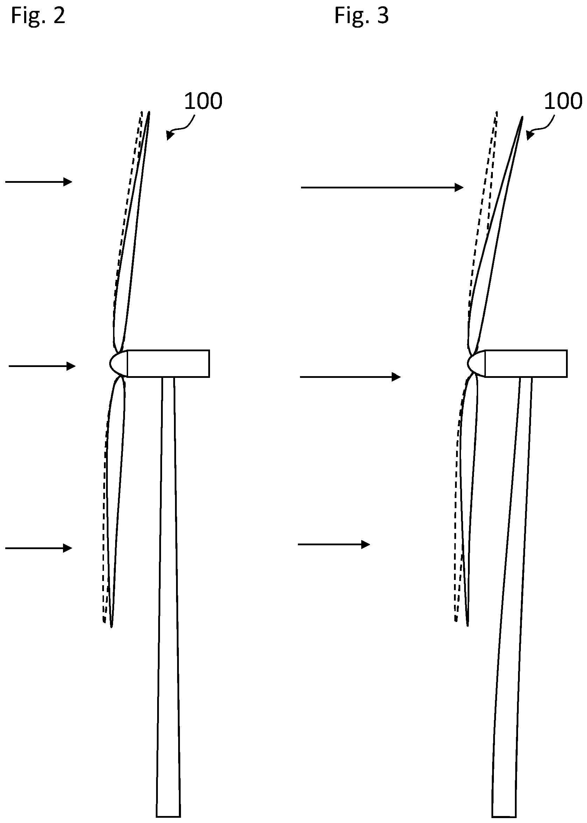

Figure 2 shows the wind turbine 100 from a side view during operation of the wind turbine 100. Wind acting on the rotor 10 of the wind turbine 100 is indicated by the arrows. In figure 2, the wind speed is constant all over the rotor 10. Due to the forces acting on the rotor blades, the rotor blades are deflected with respect to their rest positions (the rest positions are indicated by the dashed lines). As a consequence, tilt bending moments and yaw bending moments act on the rotor in order to deflect or tilt the rotor plane, respectively.

In figure 3, an overall higher wind speed acts on the rotor 10. Furthermore, the wind speed is lower closer to the ground than further away from the ground (so-called wind shear). As can be seen, the deflection of the rotor blades is now larger compared to figure 2. Moreover, due to the greater thrust force acting on the rotor, the tower is bended.

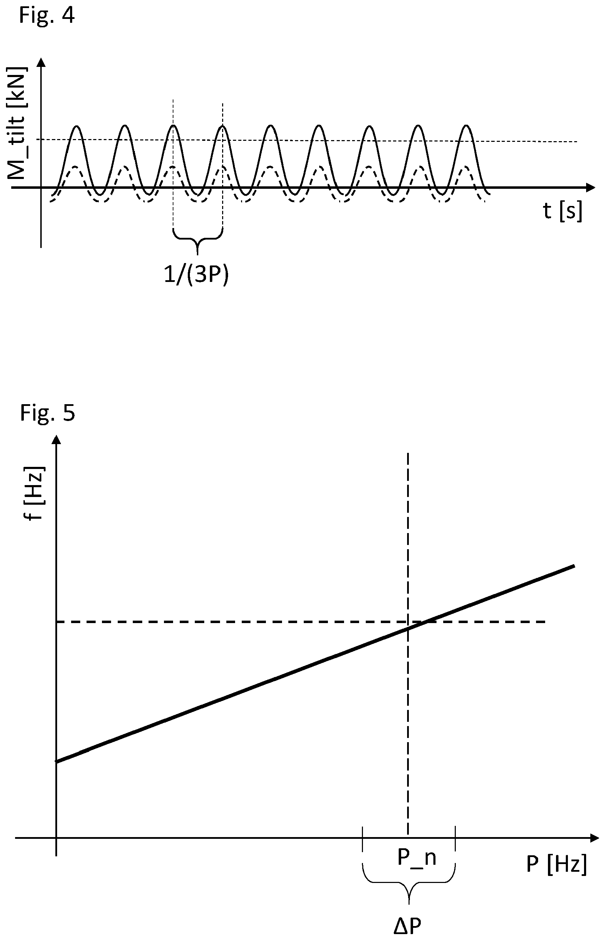

Since, during operation of the wind turbine 100, the rotor 10 is rotating, the tilt bending moments and the yaw bending moments acting on the rotor 10 oscillate. This can be seen in figure 4, showing the tilt bending moment M_tilt acting on the rotor 10 while the rotor is rotating with frequency P as a function of time t. The dashed curve shows the case of the lower overall wind speed and constant wind speed, as illustrated in connection with figure 2, and the solid line shows the case of the higher overall wind speed and wind shear, as illustrated in connection with figure 3. As can be seen, the tilt bending moment M_tilt indeed oscillates with frequency 3*P.

The tilt bending moment M_tilt as shown in figure 4 may be determined, for example, from measurements taken with the first sensor system 11 and with the help of a coordinate transformation from the rotating reference frame into the fixed reference frame of, for example, the nacelle 106.

Figure 5 shows a graph with the frequency P with which the rotor 10 is rotating on the x-axis and the frequency of edge-wise vibrations of the rotor blades on the y-axis. The horizontal dashed line indicates the first Eigen-frequency of the edge-wise vibrations of the rotor blades. The first Eigen-frequency changes only very little with increasing frequency P (not visible in figure 5). The solid line in figure 5 is the frequency (M*N+1)*P, with N being the number of rotor blades of the wind turbine and M being an integer greater than zero. For the present case, N = 3 and M = 1, thus the solid line shows the frequency 4*P.

As can be seen, the frequency 4*P intersects with the first Eigen-frequency of the edge-wise vibration of the rotor blades at a certain point. The vertical dashed line indicates the nominal rotational speed of the rotor or the nominal frequency P_n of the rotor, respectively. This nominal frequency is very close to the point where the first Eigen-frequency and the frequency 4*P intersect. Thus, when the rotor is rotating with a frequency P close to the nominal frequency P_n, an excitation of the edge-wise vibration with frequency 4*P would be resonant.

On the other hand, the frequency 4*P in the rotating reference frame corresponds to the frequency 3*P in the fixed reference frame. Consequently, a periodic force acting on the rotor 10 with the frequency 3*P can resonantly excite the edge-wise vibrations of the rotor blades 1, 2, 3 at their first Eigen-frequencies when the rotor 10 is rotating with a frequency P close to the nominal frequency P_n. Such a large periodic force acting on the rotor 10 with frequency 3*P appears, however, for example due to a wind shear or local gust as explained in connection with figures 2 to 4.

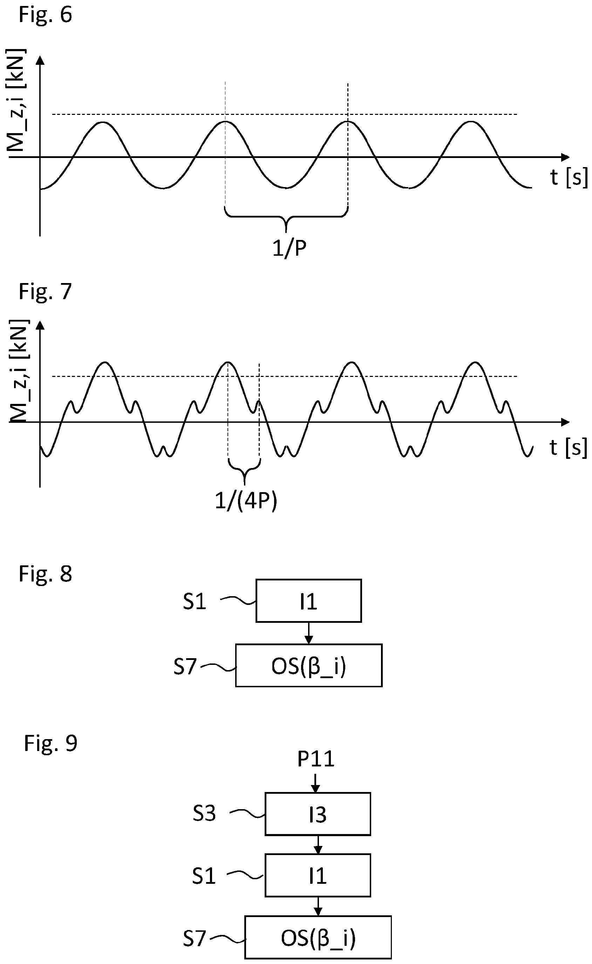

Figures 6 and 7 illustrate measurements of edge-wise bending moments M_z,i of a rotor blade as a function of time t. Figure 6 shows the case without an excitation of the first edge-wise Eigen-frequency and figure 7 shows the case with an excitation of the first edge-wise Eigen-frequency.

In figure 6, a periodic change of the edge-wise bending moment acting on the rotor blade with frequency P is visible. This P-content, i.e. content with frequency P, in the edge-wise bending moment results, for example, from the gravitational force acting on the rotor blade during rotation of the rotor with frequency P.

In figure 7, there is an additional 4*P-content, i.e. a content with frequency 4*P. The 4*P-content results, as explained above, from wind shear or local gust acting on the rotor. The 4*P content is considerably large since it is resonantly excited (when P is close to the nominal frequency). Thus, the maximum amplitude of the edge-wise vibration is considerably increased in figure 7 compared to figure 6.

Since wind shear or local gust appear very often during operation of a wind turbine, large edge-wise vibrations of the rotor blades as indicated in figure 7 appear frequently. However, such edge-wise vibrations induce high load on the rotor shaft and can also damage the rotor blades themselves. The vibrations could be reduced by reducing the rotational speed away from the nominal frequency P_n or by a shutdown of the wind turbine. This reduces the annular energy production.

The inventors of the present invention developed a method for operating a wind turbine which allows the edge-wise vibrations of the rotor blades to be reduced without the need to change the rotational speed of the rotor or shutting down the wind turbine.

Figure 8 shows a first exemplary embodiment of this method for operating a wind turbine. In a step S1, a first information I1 is determined which is representative for whether an edge-wise movement of at least one rotor blade 1, 2, 3 exceeds a threshold while the rotor is rotating with frequency P. If the first information I1 is representative for the edge-wise movement of at least one rotor blade to exceed the threshold, a step S7 is executed in which an output signal OS is generated. The output signal OS is configured to cause the pitch setting system 13 to individually and periodically change the pitch angles β_i of the rotor blades 1, 2, 3 each with a frequency of (M*N-1)*P in order to reduce the edge-wise movement of the at least one rotor blade. The index "i" herein stands for the different rotor blades and can be 1, 2 or 3 in the present case of three rotor blades.

As before, M = 1 and N = 3, so (M*N-1)*P = 2*P. This means that for each rotor blade 1, 2, 3, the pitch angle β_i is periodically changed with the frequency 2*P. With such a periodic change in the pitch angles β i, the excitation of the first edge-wise Eigen-frequency can indeed be counteracted.

For example, for each rotor blade 1, 2, 3, when the rotor blade is at the point of the highest wind speed, the pitch angle β_i is chosen such that the thrust force acting on the rotor blade is reduced (large pitch angle) and when the rotor blade is at the point opposite of the location of the highest wind speed, the pitch angle β_i of the rotor blade is chosen such that the thrust force acting on the rotor blade is increased (small pitch angle). In this way, the 3*P-content in the tilt-bending moment M_tilt is reduced and consequently the excitation of the first Eigen-frequency of the edge-wise vibration is less prominent. For example, the pitch angle β_i of each rotor blade 1, 2, 3 may be changed by at least 1° or at least 2° or at least 3° during the periodic change.

Figure 9 shows a second exemplary embodiment of the method in which a step S3 is executed before step S1. In step S3, third information I3 is provided which is representative for the bending moments M_y,i, M_z,i acting on the rotor blades 1, 2, 3. The bending moments are the edge-wise bending moments M_z,i, as for example shown in figures 6 and 7, and the flap-wise bending moments M_y,i of the rotor blades. The third information I3 is determined with the help of the measurements P11 taken with the first sensor system 11.

The first information I1 is then determined depending on the third information 13. For example, it is determined whether an amplitude of the edge-wise bending moment M_z,i of at least one rotor blade 1, 2, 3 exceeds a threshold (see horizontal dashed line in figures 6 and 7). If it is determined that the edge-wise bending moment M_z,i exceeds the threshold, the first information I1 is determined to be representative for the edge-wise movement of the respective rotor blade to exceed the threshold and, accordingly, the output signal OS is generated.

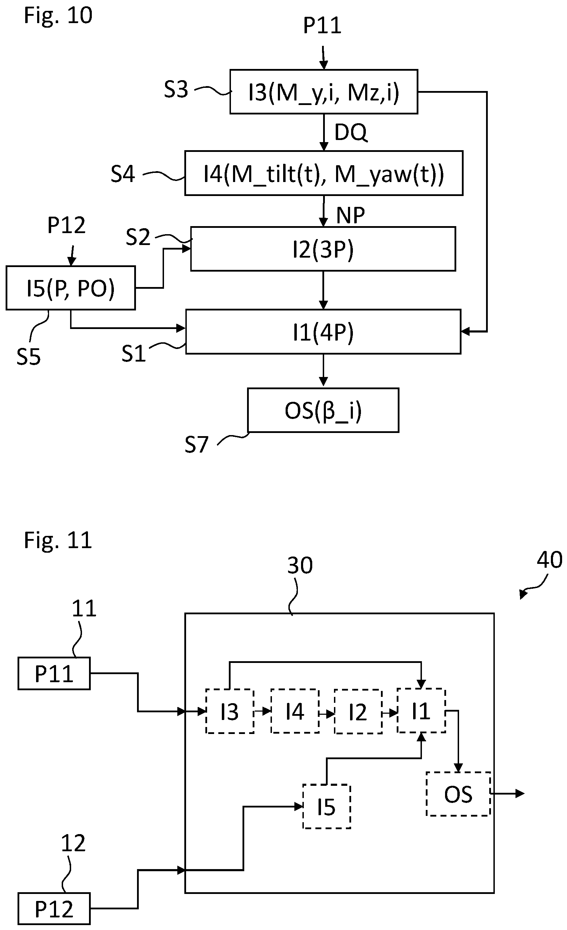

In the exemplary embodiment of figure 10, measurements P11 from the first sensor system 11 are provided. These measurements P11 are used to determine the third information 13. Afterwards, a fourth information I4 is determined depending on the third information I3. The third information I4 is representative for a bending moment, for example the tilt bending moment M_tilt and/or the yaw bending moment M_yaw, acting on the rotor 10. These bending moments M_tilt, M_yaw can be determined from the bending moments M_y,i, M_z,i acting one the rotor blades 1, 2, 3 by using a coordinate transformation DQ, e.g. a Coleman transformation. The fourth information I4 is, for example, what is shown in connection with figure 4.

The fourth information I4 is then used to determine a second information I2 (step S2). The second information I2 is representative for the M*N*P-content, i.e. the 3*P-content for the present case, in the bending moment(s) M_tilt, M_yaw. This 3*P content can be extracted by using a band-pass filter and/or a notch filter, for example.

Additionally, the method comprises a step S5 in which fifth information I5 is provided (step S5). The fifth information I5 is representative for the rotational speed of the rotor, i.e. the frequency P, and/or the power output PO of the wind turbine. The fifth information I5 is, for example, determined depending on the measurements P12 taken with the help of the second sensor system 12.

The first information I1 being representative for whether the edge-wise movement of at least one rotor blade exceeds the threshold is then determined depending on the second information I2, depending on the third information I3 and depending on the fifth information I5. For example, with the help of the second information I2 it is determined whether an amplitude of the 3*P-content in a bending moment M_tilt, M_yaw exceeds a threshold (see, for example, horizontal dashed line in figure 4). With the help of the third information I3, it may be determined whether an amplitude of the edge-wise bending moment M_z,i of at least one rotor blade 1, 2, 3 exceeds a threshold (see horizontal dashed line in figures 6 and 7). With the help of the fifth information I5, it may be determined whether the frequency P with which the rotor 10 is rotating lies in a critical frequency range ΔP (see range indicated in figure 5) and/or whether the power output PO lies in a critical power range. Only if at least two of the mentioned conditions are fulfilled, is the first information I1 determined to be representative for the edge-wise movement of at least one rotor blade 1, 2, 3 to exceed the threshold and, accordingly, the output signal OS is generated.

Figure 11 shows an exemplary embodiment of the control system 40. The control system 40 comprises the sensor systems 11, 12, with which the measurements P11, P12 can be taken. These measurements P11, P12 are provided to the control device 30 which performs the method steps as described in connection with figures 8 to 10 and delivers an output signal OS, which the control system 40 then transmits to the pitch setting system 13 of the wind turbine 100 in order to adjust the pitch angles.

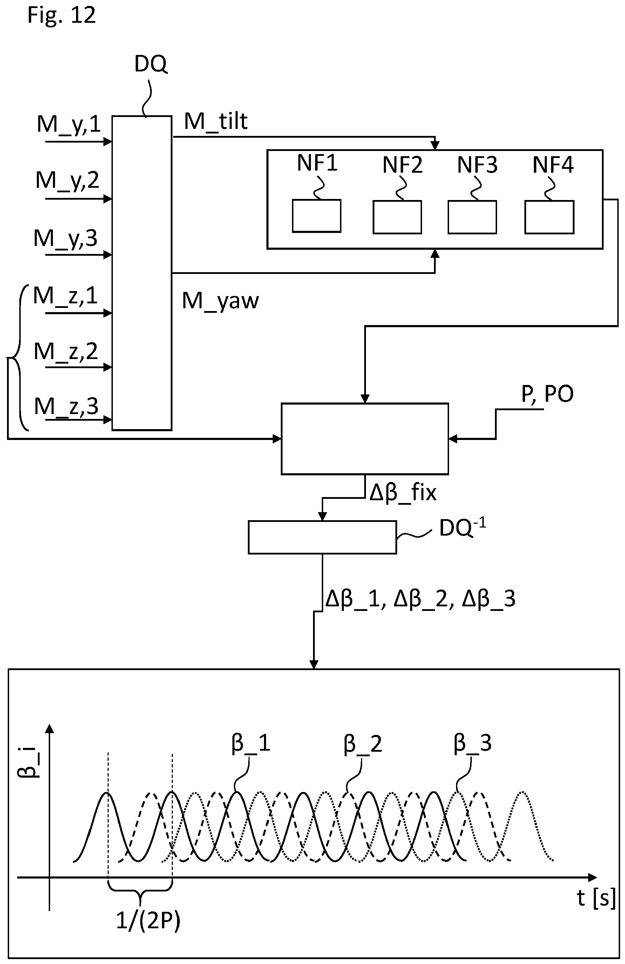

Figure 12 shows a further exemplary embodiment of the method indicating the different calculations done when performing the method. Bending moments M_y,i, M_z,i acting on the rotor blades 1, 2, 3, which may have been determined depending on the measurements P11 obtained from the first sensor system 11, are used as an input for a coordinate transformation DQ, e.g. a Coleman transformation DQ, in order to transform from the rotating reference frame into the fixed reference frame. The coordinate transformation DQ delivers the bending moments M_tilt, M_yaw acting on the rotor 10. Filters NF1, NF2, NF3, NF4 are applied to the bending moments M_tilt, M_yaw in order to extract different contents in the bending moments M_tilt, M_yaw. The filters may be band-pass filters. For example, the filter NF1 extracts the 3*P-content, the filter NF2 extracts the 6*P-content, the filter NF3 extracts the 9*P-content and so on.

The results of the filters together with the information about the edge-wise bending moments M_z,i and the information about the frequency P with which the rotor 10 rotates and/or the power output PO are then used to determine the first information I1. A quantity Δβ_fix is calculated in the case that the first information I1 is representative for the edge-wise movement of at least one rotor blade 1, 2, 3 to exceed the threshold. An inverse coordinate transformation DQ⁻¹ is applied to this quantity in order to transform from the fixed reference frame back into the rotating reference frame. The output of this are individual and periodic changes Δβ_1, Δβ_2, Δβ_3 of the pitch angles β_i of the different rotor blades 1, 2, 3. This information is then stored in the output signal OS and transferred to the pitch setting system 13.

The pitch angles β_i as a function of time t as determined with the above-described method are illustrated in the lower part of figure 12. The pitch angles β_i oscillate with the frequency 2*P and the curves are phase-shifted with respect to one another.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs:

- 1: first rotor blade
- 2: second rotor blade
- 3: third rotor blade
- 10: rotor
- 11: first sensor system
- 12: second sensor system
- 13: pitch control system
- 20: tower
- 30: control device
- 40: control system
- 100: wind turbine
- 104: foundation
- 106: nacelle
- 112: rotor hub

- I1: first information
- I2: second information
- I3: third information
- I4: fourth information
- I5: fifth information
- OS: output signal

- M_z,i: edge-wise bending moment
- M_y,I: flap-wise bending moment
- M_tilt: tilt bending moment
- M_tilt: yaw wending moment
- β_i: pitch angle
- Δβ_i: pitch angle change
- Δβ_fix: pitch angle change in fixed reference frame
- P11: measurements
- P12: measurements
- P: frequency
- P_n: nominal frequency
- PO: power output
- ΔP: frequency range

- DQ: coordinate transformation
- DQ⁻¹: inverse coordinate transformation
- NF1: first filter
- NF2: second filter
- NF3: third filter
- NF4: fourth filter

- S1 to S7: method steps

## Claims

1. Method for operating a wind turbine (100) having a rotor (10) with N rotor blades (1, 2, 3), wherein N ≥ 2, and a pitch setting system (13) for individually setting the pitch angles (β_i) of the N rotor blades (1, 2, 3), the method comprising
- (S1) determining first information (I1) which is representative for whether an edge-wise movement of at least one rotor blade (1, 2, 3) exceeds a threshold while the rotor (10) is rotating with frequency P, and, if this is the case,
- (S7) generating an output signal (OS) which is configured to cause the pitch setting system (13) to individually and periodically change the pitch angles (β_i) of the N rotor blades (1, 2, 3) each with a frequency of (M*N-1)*P in order reduce edge-wise movements of the rotor blades (1, 2, 3), wherein M is an integer greater than 0.

2. Method according to claim 1, further comprising
- (S2) providing second information (I2) which is representative for a M*N*P-content in a bending moment (M_tilt, M_yaw) acting on the rotor (10) while the rotor (10) is rotating with frequency P, wherein
- the M*N*P-content (3P) is the content in the bending moment (M_tilt, M_yaw) having the frequency M*N*P,
- wherein the first information (I1) is determined depending on the second information (I2).

3. Method according to claim 1 or 2, wherein
- N = 3, and
- M = 1.

4. Method according to any one of the preceding claims, further comprising
- (S3) providing third information (I3) which is representative for bending moments (M_y,i, M_z,i) acting on the rotor blades (1, 2, 3),
- wherein the first information (I1) is determined depending on the third information (I3).

5. Method according to claim 2 or any one of claims 3 and 4 in its dependency on claim 2, further comprising
- (S4) providing fourth information (I4) which is representative for a bending moment (M_tilt, M_yaw) acting on the rotor (10) as a function of time,
- wherein the second information (I2) is determined depending on the fourth information (I4) with the help of a filter.

6. Method according to claims 4 and 5, wherein
- the fourth information (I4) is determined depending on the third information (I3) using a coordinate transformation.

7. Method according to claim 2 or any one of claims 3 to 6 in its dependency on claim 2, wherein
- determining the first information (I1) comprises determining whether the amplitude of the M*N*P-content exceeds a threshold.

8. Method according to claim 4 or any one of claims 5 to 7 in its dependency on claim 4, wherein
- the third information (I3) is representative for the respective edge-wise bending moment (M_z,i) acting on the rotor blades (1, 2, 3),
- the first information (I1) is determined depending on the third information (I3) and comprises determining whether the amplitude of the edge-wise bending moment (M_z,i) acting on at least one rotor blade (1, 2, 3) exceeds a threshold.

9. Method according to claim 8, wherein
- determining the first information (I1) comprises determining whether a (M*N+1)*P-content in the edge-wise bending moment (M_z,i) acting on a rotor blade (1, 2, 3) exceeds a threshold, wherein
- the (M*N+1)*P-content is the content in the edge-wise bending moment (M_z,i) having the frequency (M*N+1)*P.

10. Method according to any one of the preceding claims, comprising
- determining the first information (I1) comprises determining whether the frequency P lies within a critical frequency range (ΔP) and/or whether the power output (PO) of the wind turbine (100) lies within a critical power range (ΔPO).

11. Method according to claim 4 or any one of claims 5 to 10 in its dependency on claim 4, wherein
- the third information (I3) is determined depending on measurements (P11) taken with the help of a sensor system (11) .

12. Computer program comprising instructions which, when the program is executed by a computer, cause the computer to carry out the method of any one of claims 1 to 11.

13. Computer-readable data carrier having the computer program of claim 12 stored thereon.

14. Control device (30) comprising at least one processor configured to perform the method of any one of claims 1 to 11.

15. Control system (40) for operating a wind turbine (100) having a rotor (10) with N rotor blades (1, 2, 3), wherein N ≥ 2, and a pitch setting system (13) for individually setting the pitch angles (β_i) of the N rotor blades (1, 2, 3), the control system (40) comprising
- a sensor system (11) configured to take measurements (P11) with the help of which it is determinable whether an edge-wise movement of at least one rotor blade (1, 2, 3) exceeds a threshold while the rotor (10) is rotating with frequency P,
- the control device (30) according to claim 14, wherein
- the control device (30) is signally connectable to the sensor system (11) in order to provide the control device (30) with the measurements (P11) of the sensor system (11),
- the control device (30) is signally connectable to the pitch setting system (13) in order to provide the pitch setting system (13) with the output signal (OS) of the control device (30) so that the pitch setting system (13) sets the pitch angles (β_i) of the rotor blades (1, 2, 3) depending on the output signal (OS).

16. Wind turbine (100) comprising
- a rotor (10) with N rotor blades (1, 2, 3), wherein N ≥ 2,
- a pitch setting system (13) for individually setting the pitch angles (β_i) of the N rotor blades (1, 2, 3),
- the control system (40) according to claim 15.
